# EUROPEAN PATENT APPLICATION

(11) **EP 2 862 687 A1**
(43) Date of publication of application: **22.04.2015**
(21) Application number: 13188617.8
(22) Date of filing: 15.10.2013
(51) Int. Cl.: B29B 13/06, F26B 17/00, B29B 13/04

(54) **Process for conveying of rubber**

(71) Applicant: Lanxess Elastomers B.V., 6167 RD Geleen (NL)
(72) Inventor: Perez Valencia, Francisco, 6221 JA Maastrich (NL)
(74) Representative: Herbold, Matthias

(57) **Abstract**

A process for pneumatically conveying a rubber crumb through a double walled pipe having an inner pipe and an outer pipe , coaxially arranged around the inner pipe, wherein
a) the inner pipe being charged with rubber and air,
b) the outer pipe is flowed with a heat exchange medium,
c) the rubber crumb charged to the inner pipe at its inlet having a 120 to 200 °C, more preferably having a temperature of 150 to 175 °C,
d) the rubber crumb contains 1 to 10.0 wt% water and
e) the air charged to the inner pipe at its inlet having a temperature of 85 to 120 °C,

characterized in that the temperature of the heat exchange medium at the inlet of the outer pipe is lower than 40 °C and at the exit of the outer pipe is lower than 70 °C, preferably lower than 60 °C and most preferably lower than 50 °C, whereby the temperature difference between the exit and the inlet of the outer pipe is at least 5 °C, preferably more than 10 °C, most preferably more than 30 °C.

## Description

The present invention relates to a process for pneumatic conveying of rubber crumb.

A typical rubber drying process utilizes a devolatizing extruder discharging to a pneumatic transportation system (e.g. pipeline). The rubber particles are generally conveyed to and discharged into an enclosed and heated vibrating conveyor. Therein the rubber particles are dried further in the heated vibrating conveyor and thence are transported via a series of open vibrating conveyors to a baling or packaging area.

However, during pneumatic transport of the rubber, the rubber particles are still hot and they tend to stick to the pipeline surface and agglomerate, thereby causing fouling of the equipment. Additionally, the hot rubber which causes the fouling tends to degrade and break away, resulting in contamination of the product. Moreover, the fouling of the inner surface of the pneumatic pipeline reduces the transport efficiency of the equipment. Ultimately, the pressure drop through the transportation pipeline becomes too high for the flow of rubber particles to continue. The pipeline then must be taken off line, warmed to above ambient temperature and solvent washed before being put back into operation.

Polymer fouling represents a serious problem and it has greatly limited the efficiency of pneumatic rubber transportation equipment.

Thus there is a need to reduce the fouling rate in rubber transportation equipment (e.g., pneumatic pipelines), in order to reduce product losses by contamination, extend the time between equipment cleaning and washes and/or to increase the throughput of the transportation system.

In EP 528821 hot rubber is cooled during transportation substantially by using a 2 step cooling process wherein the first step the hot crumb is picked-up by hot air and water vapor out of a drying extruder and thereafter exchanged in a cyclone by cool dry air for the second step. The transportation and fouling problems are resolved by cooling the rubber crumb substantially already during the first step whereby recondensation of water on the crumb is explicitly avoided by keeping the temperature over the saturation temperature. The cooled crumb however does still contain quite a high level of water that still has to be removed by a final drying step. Energy wise this process might be beneficial for transportation and cooling but not for the transport of hot crumb that still has to be finally dried.

In JP 2005-171043A it has been described that the conveying of rubber crumb that is released from a drying extruder is transported for instance to the place where the bale is pressed via a pneumatic transportation equipment. In order to achieve good operation of this transport a water-silicone mixture sprayed into the pipe is exemplified to wetting the crumb and ensure a smooth transport without any fouling effect. The drawback of this method is the addition of additional water to the crumb that needs to be thermally removed afterwards and therefore will cost extra energy and the addition of a chemical like silicone that even though being beneficial for the transportation purposes later will undesirably remain in the product and might even affect the final properties.

It was therefore an object of the present invention to provide a process which does not show the above mentioned drawbacks but nevertheless achieves a proper convey of the crumb without losing too much energy efficiency in the crumb drying process.

The present inventions therefore relates to a process for pneumatically conveying a rubber crumb through a double walled pipe having an inner pipe and an outer pipe, coaxially arranged around the inner pipe, wherein
a) the inner pipe being charged with rubber and air,
b) the outer pipe is flowed with a heat exchange medium,
c) the rubber crumb charged to the inner pipe at its inlet having a temperature of 120 to 200 °C, more preferably having a temperature of 150 to 175 °C,
d) the rubber crumb contains 1 to 10.0 wt% water and
e) the air charged to the inner pipe at its inlet having a temperature of 85 to 120 ⁰C,
**characterized in that** the temperature of the heat exchange medium at the inlet of the outer pipe is lower than 40 °C and at the exit of the outer pipe is lower than 70 °C, preferably lower than 60 °C and most preferably lower than 50 °C, whereby the temperature difference between the exit and the inlet of the outer pipe is at least 5 °C, preferably more than 10 °C, most preferably more than 30 °C.

### Crumb

The rubber crumb that is charged to the pneumatic pipe preferably has a water content of 2.0 to 4.5 wt%, preferably from 2.5 to 4.0 wt%.
The term "crumb" is well known in the art. Preferably crumb as used herein shall mean rubber particles having a particle size of at least 1 millimeter. In particular the crumb has a particle size in the range of 2 to 70 millimeters, in particular from 2 to 5 cm.

The rubber crumb may be any rubber material in particular ethylene-α-olefin-diene copolymer, like EPDM, ethylene-propylene copolymer (EPM), Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers preferably with bromine contents of 0.1 to 10 wt. % (BIIR), Chlorinated isobutylene-isoprene copolymers preferably with chlorine contents of 0.1 to 10 wt. % (CIIR), Hydrogenated or partially hydrogenated nitrile rubber (HNBR), Styrene-butadiene-acrylonitrile rubber (SNBR), Styrene-isoprene-butadiene rubber (SIBR) and Polychloroprene (CR) or mixtures thereof.

### The Air

The air to be charged for the inner pipe preferably is charged at a pressure of 0.1 to 2 barg, in particular from 0.3 to 1.0 barg. The preferred temperature of the air at the inlet of the inner pipe is in the range of 85 to 100 °C.

### The Pipe

The pneumatic convey pipe suitable for transporting rubber crumbs according to the present invention may be in the range of 5 to 50 m long, preferably from 10 to 30 m long. Preferably the inner pipe has a diameter of 60 to 300 mm, preferably from 100 to 220 mm. The heat exchange medium is preferably liquid, in particular water. The preferred temperature of the heat exchange medium at the inlet of the outer pipe is from 5 to lower than 40 °C, more preferably from 20 to 30 °C, normally measured at the inlet of the outer pipe.

Preferably the air at the outlet of the inner pipe does have a temperature that is at least 10 ⁰C, preferably at least 30 ⁰C lower than the temperature at the inlet of the inner pipe. Preferably the temperature of the air at outlet of the inner is not lower than 30 ⁰C, preferably in the range of 40 to 70 ⁰C.
Preferably the operating conditions outlined will ensure the system operates below air saturation temperature.

The crumb at the end of the inner pipe is then preferably discharged into a final dryer, preferably a fluidized vibratory conveyor and generally afterwards pressed to bales.

A process according to the present invention prevents agglomeration of the rubber crumb in the pneumatic transport equipment and thereby allowing smooth pneumatic conveying of the rubber crumb.

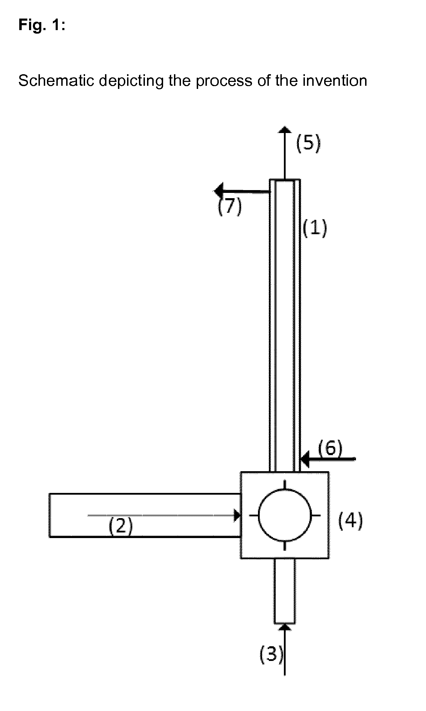

### Description of figure 1

With reference to figure 1, wherein the subject process is depicted schematically, it can be seen that the crumb pick up device (4) is installed preferably at the discharge of the drying extruder from where the crumb feed (2) comes. Air is blown to the inner pipe at (3) preferably from a blower via the pick-up device to convey the crumb particles downstream through the double walled pipe (1). The heat exchange medium is introduced at the inlet of the outer pipe (6) of the pipe (1) and exit at the outlet (7) of the double walled pipe (1). The air-crumb mixture then, leaves the double walled pipe (1) at the inner pipe outlet (5).

The dewatering and drying finishing operations for rubber crumbs typically include passing crumb slurry from a solvent stripping section over a dewatering screen, to a dewatering screw press, and thence to a drying extruder. The rubber which enters the drying extruder generally contains about 4 to about 10% volatile matter. The rubber-water mixture is heated in the extruder by mechanical work upstream of the extruder die. A sudden release of pressure occurs as the wet rubber passes through the extruder die plate, causing rapid vaporization of the water contained in the rubber crumb. Thus, at the discharge of the drying extruder, the water contained in the rubber flashes as steam, and heat is transferred from the rubber to the water so as to achieve drying and some cooling for the rubber crumb.
The water evaporated at the extruder die is normally combined with air in a device installed at the discharge of the extruder and preferably flowed to an open chamber (e.g. pipeline), into which the rubber and the water, which has been vaporized in passing through the die, are conveyed downstream the process by means of an air stream.
As previously said, however, the rubber particles which enter the conveying system are normally still hot, and sticky, and thus creates severe problems for the system components, as well as for the final product. In particular, the fine rubber particles stick to metal surfaces of the conveying pipeline, thereby necessitating the dedication of excessive manpower and downtime of the system in order to clean the equipment. The hot rubber responsible for the fouling may degrade and break away, resulting in contamination of the product. The process of the present invention overcomes these enumerated deficiencies by allowing a smooth pneumatic conveying of the rubber crumb by making use of double walled pneumatic conveying pipe having an inner pipe, having an inner flow space for pneumatic transport of rubber crumb, and with an outer pipe, coaxially arranged around the inner pipe, having an outer flow space between inner pipe and outer pipe, for flow of a thermal fluid (e.g. water).

Surprisingly, it has been found that with the process of the invention, smooth conveying of the rubber crumb is obtained.

### Example

2.0 t/h of an EPDM crumb at a temperature of 171.4 ⁰C are transported with 1000 m³/h of air at 99.8 ⁰C in an inner pipe with an outside diameter of 110 mm and a length of 25 m at 0.5 barg of pressure. Water at a flowrate of 0.7 m³/h and 24 ⁰C of inlet temperature flows through the outlet pipe of 150 mm of outside diameter. Exit temperature of the water at the end of the transportation pipe is 44 ⁰C and of the air is 64 ⁰C.
Transportation line is opened after 1 week of operation and no significant build-up of polymer is found on the inner wall of the inner pipe.

Without the conditions of the present invention, in particular in case of no cooling of the wall of the inner pipe, substantial fouling was observed already after a time of 24hours.

## Claims

1. A process for pneumatically conveying a rubber crumb through a double walled pipe having an inner pipe and an outer pipe, coaxially arranged around the inner pipe, wherein
a) the inner pipe being charged with rubber and air,
b) the outer pipe is flowed with a heat exchange medium,
c) the rubber crumb charged to the inner pipe at its inlet having a 120 to 200 °C, more preferably having a temperature of 150 to 175 °C,
d) the rubber crumb contains 1 to 10.0 wt% water and
e) the air charged to the inner pipe at its inlet having a temperature of 85 to 120 ⁰C,
**characterized in that** the temperature of the heat exchange medium at the inlet of the outer pipe is lower than 40 °C and at the exit of the outer pipe is lower than 70 °C, preferably lower than 60 °C and most preferably lower than 50 °C, whereby the temperature difference between the exit and the inlet of the outer pipe is at least 5 °C, preferably more than 10 °C, most preferably more than 30 °C.

2. A process according to claim 1 wherein the crumb rubber is ethylene-α-olefin-diene copolymer, ethylene-propylene copolymer (EPM), Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers (BIIR), chlorinated isobutylene-isoprene copolymers (CIIR), hydrogenated or partially hydrogenated nitrile rubber (HNBR), Styrene-butadiene-acrylonitrile rubber (SNBR), Styrene-isoprene-butadiene rubber (SIBR) and Polychloroprene (CR) or mixtures thereof.

3. A process according to at least claim 1 or 2, wherein the crumb has a water content of 2.0 to 4.5 wt%, preferably from 2.5 to 4.0 wt%.

4. A process according to at least one of claims 1 to 3, wherein the temperature of the air at the inlet of the inner pipe is in the range of 85 to 100 °C.
